# EUROPÄISCHE PATENTSCHRIFT

(11) **EP 0 782 510 B1**
(45) Veröffentlichungstag und Bekanntmachung des Hinweises auf die Patenterteilung: **08.08.2001**
(21) Anmeldenummer: 95932692.7
(22) Anmeldetag: 08.09.1995
(51) Int. Cl.: B60Q 1/14

(54) **LENKSTOCKSCHALTER ALS GETRIEBESCHALTER MIT FIXIERBARER NEUTRALSTELLUNG**
STEERING SHAFT SWITCH AS A GEAR-CHANGE SWITCH WHICH CAN BE FIXED IN A NEUTRAL SETTING
COMMUTATEUR MONTE SUR LA COLONNE DE DIRECTION, SERVANT D'ORGANE DE CHANGEMENT DE VITESSES AVEC POSSIBILITE DE FIXATION EN POSITION NEUTRE

(30) Priorität: 21.09.1994 DE 4433595
(43) Veröffentlichungstag der Anmeldung: 09.07.1997
(73) Patentinhaber: Valeo Schalter und Sensoren GmbH, 74321 Bietigheim-Bissingen (DE)
(72) Erfinder: NEUBAUER, Walter, D-74348 Lauffen (DE); KLEIN, Rudolf, D-74348 Lauffen (DE)
(74) Vertreter: Dreiss, Fuhlendorf, Steimle & Becker
(86) Internationale Anmeldenummer: EP9503531
(87) Internationale Veröffentlichungsnummer: WO9609187

(56) Entgegenhaltungen:
- DE-A- 2 432 873
- DE-A- 3 940 284
- DE-A- 3 942 925
- DE-A- 4 319 065
- FR-A- 2 219 031

## Beschreibung

Die Erfindung betrifft einen Lenkstockschalter mit den Merkmalen des Oberbriffs des Anspruchs 1.

Bei schweren Fahrzeugen wie Landmaschinen und Baufahrzeugen findet die Einstellung des Getriebes vielfach mittels eines elektrischen Schalters statt. Dabei werden, ausgehend von einer neutralen Stellung mit Hilfe eines ersten Schalters Vorwärts- bzw. Rückwärtsfahrt eingestellt und dann mittels eines zweiten Schalters bei vorgewählter Fahrtrichtung die einzelnen Gänge eingelegt.

Die bekannten Lenkstockschalter (z.B. DE 43 19 065 A1) sind im Stande, Schaltvorgänge in zwei senkrecht zueinander liegenden Ebenen zu realisieren. In Folge dessen lassen sich derartige Lenkstockschalter sowohl zur Vorgabe der Fahrtrichtung als auch zum Einstellen der gewünschten Gänge anwenden. So sind beispielsweise Drehstockschalter vorgeschlagen worden, die einerseits durch eine Schwenkbewegung des Schalthebels Schaltvorgänge auslösen können und andererseits am manuell betätigten Ende des Schalthebels einen Drehgriff besitzen, mit dem sich unabhängig von der Schwenklage des Schalthebels die gewünschten Schaltstellungen einstellen lassen. Ein derartiger Schalter ist im Prinzip gut als Getriebeschalter geeignet, in dem beispielsweise durch Schwenken des Schalthebels die Fahrtrichtung und durch entsprechendes Drehen des Handgriffs die einzelnen Gänge geschaltet werden können.

Es muß nun dringend verhindert werden, daß versehentlich beim Betätigen des Schalthebels bei einem eingelegten Gang die Fahrtrichtung geändert wird.

Aus der DE 39 40 284 A1, DE 39 42 925 A1 und der DE 43 19 065 A1 sind weitere Schalter bekannt. Ausgehend von der DE 43 19 065 A1 liegt der Erfindung die Aufgabe zugrunde, bei einem derartigen, als Betriebsschalter angewandten Lenkstockschalter sicherzustellen, daß der die Fahrtrichtung bestimmende Schalter nicht versehentlich betätigt werden kann.

Die Aufgabe wird durch einen Lenkstockschalter gelöst, der die Merkmale des Anspruchs 1 aufweist.

Die Erfindung besteht im Prinzip also darin, die Betätigung des Schalthebels in einer ersten Ebene der Wahl der gewünschten Fahrtrichtung zuzuordnen, während die Betätigung des Schalthebels in einer zweiten Ebene dazu dient, in dem Schalthebel entgegen einer Vorspannung aus einer arretierten Neutralstellung in eine Arbeitslage zu bringen, in der eine Änderung der Fahrtrichtung eingestellt werden kann. Der erfindungsgemäße Schalter läßt eine Fahrtrichtungsänderung nur dann zu, wenn man den Schalthebel zum einen gegen den Widerstand einer Feder in einer Arbeitslage hält, und gleichzeitig entgegen dem Wiederstand weiterer Federmittel eine quergerichtete Steuerbewegung des Schalthebels durchführt um die gewünschte Fahrtrichtung einzustellen. Eine gleichzeitige zufällige Bewegung des Schalthebels in beide Richtungen scheint somit praktisch ausgeschlossen, so daß eine Fahrtrichtungsänderung nur mit Willen der Bedienungsperson vorgenommen werden kann.

Der hier beschriebene Lenkstockschalter ist insbesondere dann als Getriebeschalter geeignet, wenn er gleichzeitig noch einen in seinen Griff eingebauten Drehschalter besitzt, so daß mit einer Hand sowohl die Fahrtrichtungsänderung als auch die Einschaltung des gewünschten Ganges möglich ist, wobei die oben beschriebene Arretierungsfunktion erhalten bleibt.

An sich ist es möglich, daß ein mit dem Halteglied verbundener Stift beim Übergang des Haltegliedes in seine zweite Lage in eine entsprechende Ausnehmung des Mitnehmers eingreift und somit eine Schwenkbewegung des Mitnehmers um seine Achse blockiert.

Um aber den Mitnehmer auch dann noch sicher zu halten, wenn größere Kräfte auf diesen ausgeübt werden, empfiehlt sich in Weiterbildung der Erfindung die Verwendung der Merkmalskonation nach Anspruch 2.

Um sicherzustellen, daß das Halteglied sicher in dem Gehäuse des Schalters geführt wird, schlägt die Erfindung die in Anspruch 3 angegebene Merkmalskombination vor. Damit läßt sich sicherstellen, daß das Halteglied nicht verkanten kann und somit eine Betätigung des Getriebeschalters blockiert.

Das bisher beschriebene Prinzip ist generell für alle Schalter anwendbar, bei denen eine Schaltung nur dann möglich sein soll, wenn gleichzeitig eine Arretierung außer Kraft gesetzt wird. Um den vorliegenden Schalter vorzugsweise als Getriebeschalter einsetzen zu können, empfiehlt sich in Weiterbildung der Erfindung die Merkmalskombination, bei der der Schalthebel in einer (mittleren) neutralen Lage festgehalten wird, aus der er nur in beiden Richtungen seitlich ausgeschwenkt werden kann, wenn gleichzeitig der Hebel entgegen einer Vorspannung gedrückt wird. Dieser neutralen Lage können beispielsweise auch bestimmte Schaltvorgänge zugeordnet sein, die den erfindungsgemäßen Schalter auch in der Neutralstellung dazu befähigen, einen zusätzlichen Stromkreis zu schließen, der in den Starterstromkreis des Motors eingeschleift ist. Der Motor kann daher nur in der neutralen Lage gestartet werden, so daß vermieden wird, daß die Verbrennungskraftmaschine in einer der Betriebsstellungen zum Vorwärts- oder Rückwärtslauf des Getriebes gestartet werden kann.

Ein besonders einfacher Aufbau für den Getriebeschalter ergibt sich durch die Verwendung der Merkmalskombination nach Anspruch 4. Danach wird das Schaltwerk durch eine Kombination von Mikroschaltern gebildet, wobei jeder der Schaltstellungen des Schalthebels ein Mikroschalter zugeordnet sein kann. Es ist aber auch denkbar, daß durch eine besondere Steuerkontur am Steuerglied mehrere Mikroschalter gleichzeitig oder in zeitlicher Abhängigkeit voneinander betätigt werden.

Um für das Halteglied die Führung auch bei umfangreicher Belastung zu verbessern, empfiehlt sich in Weiterbildung der Erfindung die Merkmalskombination nach Anspruch 5.

Ein Ausführungsbeispiel wird nachfolgend anhand der Zeichnung erläutert. Darin zeigen:
- Fig. 1: in herausgebrochener Darstellung einen erfindungsgemäßen Schalter mit in Sperrlage befindlichem Halteglied,
- Fig 2: das Halteglied in der in Figur 1 gezeigten Lage,
- Fig. 3: das Halteglied nach Figur 2 in Draufsicht und
- Fig. 4: das Halteglied nach Figur 3 in Seitenansicht.

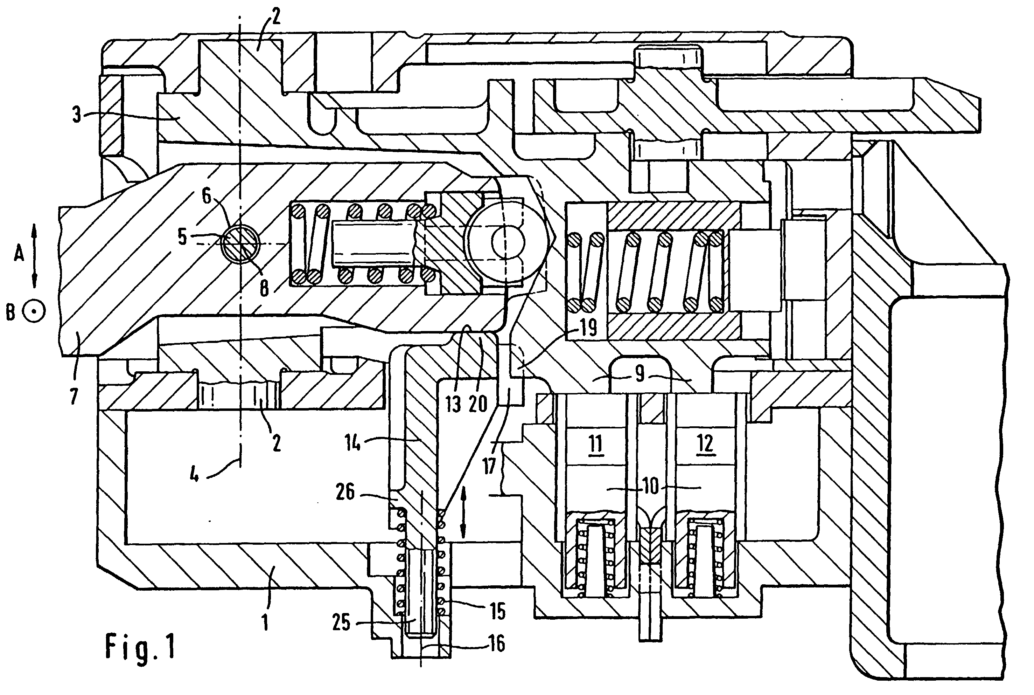

Der in Figur 1 gezeigte Schalter wird nur insoweit beschrieben, wie es für das Verständnis der Erfindung wesentlich ist. Einzelheiten zu weiteren Merkmalen dieses Schalters können der DE-OS 39 40 284 A1, DE 39 42 925 A1 und der DE 43 19 065 A1 entnommen werden. Wie in den genannten Schriften bereits beschrieben, ist innerhalb eines aus einzelnen Gehäuseteilen zusammengesetzte Gehäuse 1 über zwei Lagerzapfen 2 ein Mitnehmer 3 drehbar gelagert, so daß der Mitnehmer 3 um die Mitnehmerschwenkachse 4 im Gehäuse verschwenkt werden kann.

Über fest mit dem Mitnehmer 3 verbundene Drehzapfen 5 in eine Lageröffnung 6 eines Schalthebels 7 eingreifend, ist der Schalthebel um die Hebelschwenkachse 8 schwenkbar. Der Schalthebel 7 läßt sich somit in zwei zueinander senkrechten Richtungen bewegen und zwar einmal in Richtung des in der Betrachterebene von Figur 1 liegenden Doppelpfeiles A und weiterhin auch senkrecht hierzu in Richtung des angedeuteten Pfeils B. Schwenkt man den Schalthebel in der senkrecht zur Betrachterebene in Figur 1 liegenden Richtung B, so wird der Mitnehmer 2 aus dieser Ebene herausverschwenkt und ein oder mehrere Schaltglieder 9 können dabei ein Schaltwerk 10 betätigen, welches beispielsweise aus den Mikroschaltern 11 und 12 bestehen kann. Dabei können beispielsweise durch die genannte Schwenkbewegung mit geeigneten Anlaufschrägen versehene Schaltstößel der Mikroschalter 11, 12 betätigt werden. Hierzu können auch den beiden aus einer neutralen Lage herausgeschwenkten Endstellungen des Mitnehmers 3 bestimmmte Schaltzustände des Schaltwerkes 10 zugeordnet sein.

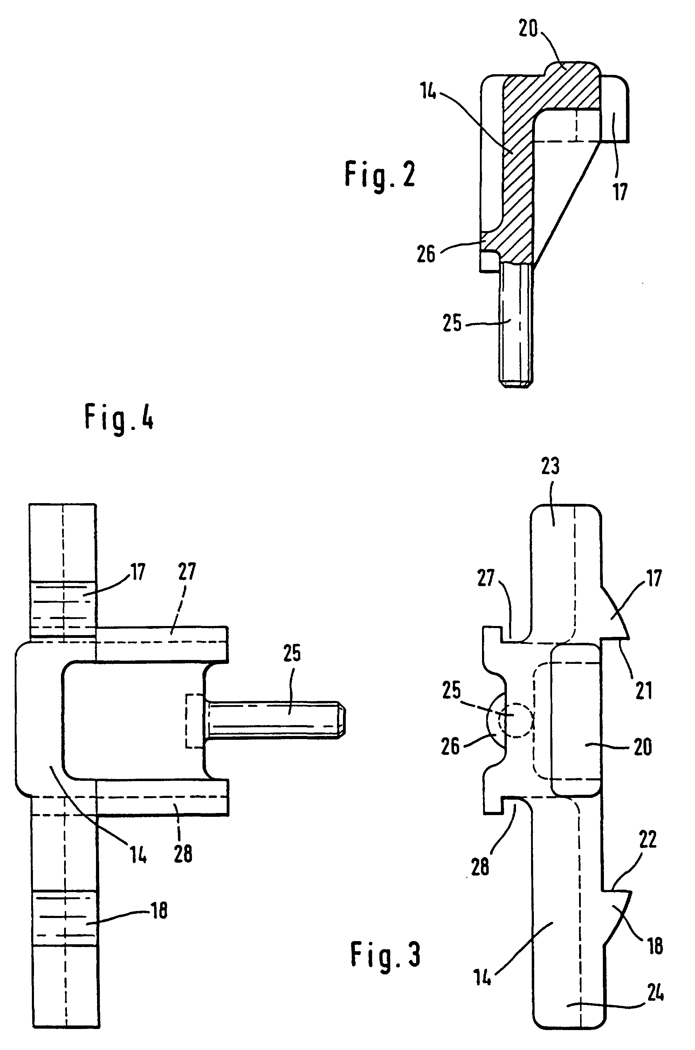

Wird nun der Schalthebel 7 um die Achse 8 in Richtung des Pfeiles A nach oben geschwenkt, so wandert um einen entsprechenden Betrag der Anlagebereich 13 des Schalthebels 7 nach unten. Unterhalb des Anlagebereiches 13 ist ein Halteglied 14 entgegen der Kraft einer Haltefeder 15 in dem Gehäuse 1 längs verschiebbar gelagert und zwar verschiebbar in Richtung der Längsachse 16 des Haltegliedes 14. Für die Erfindung ist es vorteilhaft, wenn, wie aus Figur 3 ersichtlich, das Halteglied 14 mit zwei Klauen 17, 18 versehen ist, welche an seitlichen Wandbereichen 19 angreifen. In der in Figur 1 dargestellten Haltelage greifen also die Klauen 17, 18 an gegenüberliegenden Wandbereichen 19 des Mitnehmers 3 an, so daß durch eine in Richtung B wirkende Kraft auf den Schalthebel 7 der Mitnehmer nicht aus seiner arretierten Stellung herausgedreht werden kann.

Die auf den Schalthebel 7 in dieser Art ausgeübte Kraft hat somit keine Wirkung, da der Schalthebel 7 in dem festgehaltenen Mitnehmer sich nicht in Kraftrichtung bewegen kann. Damit kann trotz der Wirkung der Kraft in Richtung B das Schaltwerk 10 nicht durch den Mitnehmer 2 betätigt werden.

Will man nun erreichen, daß die Kraft in Richtung B zu einer Veränderung des Schaltzustandes in dem Schaltwerk 10 führt, so muß zuvor der Schalthebel 7 um die Hebelschwenkachse 8 geschwenkt werden. Dies geschieht dadurch, daß der Schalthebel in Richtung des Pfeils A in Figur 1 nach oben gezogen wird. Der somit nach unten gedrückte Anlagebereich 13 wirkt auf den Betätigungsvorsprung 20 des Haltegliedes 14 ein und verschiebt diesen entgegen der Kraft der Feder 15 nach unten. Damit geraten die Klauen 17, 18 außer Eingriff zu den Wandbereichen 19 des Mitnehmers 3 für daß der Mitnehmer 3 um die Achse 4 der Lagerzapfen 2 geschwenkt werden kann. Die Wirkung einer Kraft in Richtung B führt somit zu einer entsprechenden Schwenkbewegung des Mitnehmers 3 und damit zur Betätigung des Schaltwerkes 10.

Verwendet man den gezeigten Lenkstockschalter als Getriebeschalter, so wird somit ausgeschlossen, daß der Schalthebel 7 aus seiner in Figur 1 dargestellten neutralen Stellung unbeabsichtigt in Richtung B verschoben werden kann und somit das Schaltwerk 10 das Getriebe umgeschaltet und damit das Fahrzeug entweder in Vorwärts- oder Rückwärtsrichtung bewegt wird. Soll eine derartige Schaltung des Getriebes vorgenommen werden, so muß zuvor der Schalthebel 7 in Richtung des Pfeiles A nach oben gezogen und dann die gewünschte Schwenkbewegung vorgenommen werden.

Die Figuren 2 bis 4 zeigen Einzelheiten des Haltegliedes 14. So sieht man beispielsweise aus Figur 3 die Konturen der Anlageflächen 21, 22 der Klauen 17, 18 die in Arretierungsbildung des Haltegliedes den Mitnehmer festhalten.

Das Halteglied besitzt weiterhin noch zwei Stützansätze 23, 24 mit denen es sich an der Gehäuseinnenwand abstützt, wodurch die Führung des Haltegliedes 14 im Inneren des Schaltergehäuses verbessert wird. Die entsprechenden Gehäuseteile sowie auch das Halteglied selbst sind aus Metall gefertigt.

Figur 2 und 3 zeigen weiterhin noch einen Betätigungsvorsprung 20 am Halteglied 14 der so ausgeformt ist, daß die Bewegung des Anlagebereiches 13 auf dem Betätigungsvorsprung 20 möglichst reibungsarm verläuft. Zu dem Halteglied 14 gehört weiterhin noch ein Führungsstift 25, der einerseits die Führung des Haltegliedes 14 im Gehäuse unterstützt (siehe Figur 1) und weiterhin ein Ausknicken der Feder 15 verhindert. In dem Halteglied 14 ist weiter noch ein halbkreisförmiger Anschlag 26 als Lager für die Feder 15 am Halteglied 14 vorgesehen, die sich an ihrem anderen Ende an einem Absatz am Gehäuse 1 abstützt. Das Halteglied weist weiterhin noch zwei Führungsnuten 27, 28 auf, in die entsprechende Vorsprünge des Gehäuses eingreifen und somit eine sichere Führung des Haltegliedes in einer zur Betrachtungsebene von Figur 3 senkrechten Richtung innerhalb des Gehäuses erlauben.

Ein besonderer Vorteil der Erfindung besteht darin, daß an der Stelle des Haltegliedes bei vielen Lenkstockschaltern ein weiteres Schaltwerk eingebaut ist, welches mit der beschriebenen Entriegelungsbewegung des Schalthebels 7 betätigt wird. Es ist daher nur notwendig bei den bekannten Lenkstockschaltern das zuletzt genannte zusätzliche Schaltwerk durch das Halteglied zu ersetzen um so einen üblichen Lenkstockschalter als Getriebeschalter mit den oben genannten gewünschten Eigenschaften zu erhalten.

## Patentansprüche

1. Lenkstockschalter mit einem in einem Schaltergehäuse (1) um eine erste Achse (8) schwenkbar gelagerten Schalthebel (7), wobei die Lagerung des Schalthebels (7) im Schaltergehäuse (1) innerhalb eines Mitnehmers (3) geschieht, der wiederum im Schaltergehäuse (1) um eine senkrecht zur ersten Achse (8) verlaufende zweite Achse (4) schwenkbar gelagert ist und ein mit einem gehäusefesten Schaltwerk (10) zusammenarbeitendes Schaltglied (9) trägt, wobei ein im Gehäuse verschiebbar gelagertes Halteglied (14) unter Vorspannung am Schalthebel (7) angreift und wobei das Halteglied (14) den Schalthebel (7) hält und das Halteglied (14) dabei eine Ruhelage einnimmt, dadurch gekennzeichnet, daß das Halteglied (14) in seiner Ruhelage derart am Mitnehmer (3) angreift, dass es eine Schwenkbewegung des Mitnehmers (3) verhindert, und daß durch eine Schwenkbewegung des Schalthebels (7) um die erste Achse (8) in eine Arbeitslage das Halteglied (14) entgegen seiner Vorspannung (15) in eine Lage gebracht wird, in der es den Mitnehmer (3) freigibt.

2. Lenkstockschalter nach Anspruch 1, dadurch **gekennzeichnet,** daß das Halteglied (14) seitliche Klauen (17, 18) aufweist, die den Mitnehmer (3) in der ersten Ruhelage des Haltegliedes (14) beidseitig festhalten.

3. Lenkstockschalter nach der vorhergehenden Ansprüche, dadurch **gekennzeichnet,** daß das Halteglied (14) mit seitlichen Führungsnuten (27, 28) versehen ist, die in entsprechenden Führungsschienen im Gehäuse (1) geführt sind.

4. Lenkstockschalter nach der vorhergehenden Ansprüche, dadurch **gekennzeichnet,** daß das Schaltwerk (10) aus Mikroschaltern (11, 12) gebildet ist, die in der betreffenden Arbeitslage des Mitnehmers (3) betätigbar sind.

5. Lenkstockschalter nach der vorhergehenden Ansprüche, dadurch **gekennzeichnet,** daß der Mitnehmer (3) und das Halteglied (14) sowie zumindest ein Abschnitt des Gehäuses (1) aus Metall gefertigt sind und sich die Seitenwände des Haltegliedes (14) an den Gehäuseabschnitten abstützen.

6. Lenkstockschalter nach der vorhergehenden Ansprüche, dadurch **gekennzeichnet,** daß der Schalthebel (7) zu seinem dem Mitnehmer (3) abgewandtem Ende hin mit einem Drehschalter versehen ist.

## Claims

1. Steering column switch with a switch lever (7) pivotally mounted about a first axis (8) in a switch housing (1), wherein the switch lever (7) is mounted in the switch housing (1) inside a driver (3) which, in turn, is pivotally mounted in the switch housing (1) about a second axis (4) extending perpendicularly to the first axis (8) and bears a switching element (9) cooperating with a switch mechanism (10) rigid with the housing, wherein a holding element (14) displaceably mounted in the housing acts on the switch lever (7) under bias and wherein the holding element (14) holds the switch lever (7) and, in this process, the holding element (14) adopts a rest position characterised in that the holding element (14) acts in its rest position on the driver (3) in such a way that it prevents a pivotal movement of the driver (3) and in that, against its bias (15), the holding element (14) is brought into a position in which it releases the driver (3) owing to a pivotal movement of the switch lever (7) about the first axis (8) into an operating position.

2. Steering column switch according to claim 1, characterised in that the holding element (14) has lateral claws (17, 18) which hold the driver (3) on either side in the first rest position of the holding element (14).

3. Steering column switch according to the preceding claims, characterised in that the holding element (14) is provided with lateral guide grooves (27, 28) which are guided in corresponding guide rails in the housing (1).

4. Steering column switch according to the preceding claims, characterised in that the switch mechanism (10) is formed from microswitches (11, 12) which can be actuated in the relevant operating position of the driver (3).

5. Steering column switch according to the preceding claims, characterised in that the driver (3) and the holding element (14) and at least one portion of the housing (1) are manufactured from metal and the lateral walls of the holding element (14) are supported on the housing portions.

6. Steering column switch according to the preceding claims, characterised in that the switch lever (7) is provided with a rotary switch towards its end remote from the driver (3).

## Revendications

1. Interrupteur de colonne de direction comportant un levier de commande (7) monté pivotant autour d'un premier axe (8), dans un boîtier d'interrupteur (1), le support du levier de commande (7) dans le boîtier d'interrupteur (1) étant effectué à l'intérieur d'un entraîneur (3) qui à son tour est monté dans le boîtier d'interrupteur (1) de manière à pouvoir pivoter autour d'un deuxième axe (4) perpendiculaire au premier axe (8), et qui porte un organe de commutation (9) coopérant avec un mécanisme de commutation (10) solidaire du boîtier, un organe de maintien (14), qui est monté dans le boîtier de manière à pouvoir coulisser, agissant sous précontrainte sur le levier de commande (7), et l'organe de maintien (14) maintenant le levier de commande (7) et l'organe de maintien (14) prenant ce faisant une position de repos, caractérisé en ce que l'organe de maintien (14) agit dans sa position de repos sur l'entraîneur (3) de manière à empêcher un mouvement de pivotement de l'entraîneur (3), et en ce que par un mouvement de pivotement du levier de commande (7) autour du premier axe (8) dans une position de travail, l'organe de maintien (14) est amené, à l'encontre de sa précontrainte (15), dans une position dans laquelle il libère l'entraîneur (3).

2. Interrupteur de colonne de direction selon la revendication 1, caractérisé en ce que l'organe de maintien (14) comporte des griffes latérales (17, 18) qui fixent l'entraîneur (3) des deux côtés, dans la première position de l'organe de maintien (14).

3. Interrupteur de colonne de direction selon les revendications précédentes, caractérisé en ce que l'organe de maintien (14) est pourvu de rainures de guidage (27, 28) latérales qui sont guidées dans des rails de guidage correspondants du boîtier (1).

4. Interrupteur de colonne de direction selon les revendications précédentes, caractérisé en ce que le mécanisme de commutation (10) est constitué de micro-interrupteurs (11, 12) qui peuvent être actionnés dans la position de travail concernée de l'entraîneur (3).

5. Interrupteur de colonne de direction selon les revendications précédentes, caractérisé n ce que l'entraîneur (3) et l'organe de maintien (14) ainsi qu'au moins une partie du boîtier (1) sont réalisés en métal et les parois latérales de l'organe de maintien (14) prennent appui contre les parties de boîtier.

6. Interrupteur de colonne de direction selon les revendications précédentes, caractérisé en ce que le levier de commande (7) est pourvu d'un interrupteur tournant, vers son extrémité tournée à l'opposé de l'entraîneur (3).
